# EUROPEAN PATENT APPLICATION

(11) **EP 1 072 640 A1**
(43) Date of publication of application: **31.01.2001**
(21) Application number: 99202484.4
(22) Date of filing: 28.07.1999
(51) Int. Cl.: C08K 5/15, C08L 21/00

(54) **Hardness stabilization in rubber vulcanizates**

(71) Applicant: Flexsys B.V., 7418 AJ Deventer (NL)
(72) Inventor: Talma, Auke Gerardus, 7437 AT Bathmen (NL); Datta, Rabindra Nath, 7433 HL Schalkhaar (NL); Huntink, Nicolaas Maria, 7207 JL Zuthpen (NL); Nieuwenhuis, Paulus Gerhardus Johannes, 7435 PH Okkenbroek (NL)
(74) Representative: Schalkwijk, Pieter Cornelis

(57) **Abstract**

The invention relates to a sulfur vulcanization process which comprises heating a sulfur-vulcanizable rubber composition comprising a rubber, sulfur, and a vulcanization accelerator, characterized in that the process is carried out in the presence of 0.1 to 5.0 parts by weight per 100 parts by weight of rubber of a coagent of formula I: 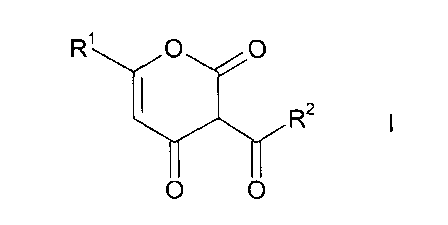 wherein R¹ and R² independently represent H or a C₁-C₅ hydrocarbon group optionally containing one or more oxygen, nitrogen, sulfur, silicon and/or phosphorus atoms. A particularly effective hardness stabilizing coagent is dehydroacetic acid. The invention also relates to rubber articles, such as pneumatic tyres, comprising the rubber vulcanizate obtained by said process.

## Description

The invention relates to a sulfur vulcanization process which comprises heating a sulfur-vulcanizable rubber composition comprising a rubber, sulfur, and a vulcanization accelerator. It further relates to rubber articles comprising the rubber vulcanizate obtained by said process.

Vulcanizing rubbers by heating with sulfur and a vulcanization accelerator has been known for many years. By this process vulcanizates having acceptable physical properties including tensile strength, resilience, and fatigue resistance can be obtained, but such vulcanizates tend not to have good aging properties. A typical aging phenomenon is hardening.
Uncured as well as cured rubbers are prone to aging effects. The unsaturated groups in diene rubbers, e.g. styrene butadiene rubber (SBR) or a blend of SBR with natural rubber or butadiene rubber, make it possible to cure with sulfur, but at the same time they exhibit a sensitivity toward oxygen, ozone, and other reactive substances. Since soft rubbers based on diene rubbers contain free double bonds, they remain sensitive to the above agents even after vulcanization. Higher temperatures make these effects more noticeable. Also, since unreacted double bonds are present in the rubber vulcanizate, the possibility exists of further reaction with sulfur causing hardening, i.e. additional cross-linking, of the vulcanizate.
The use of antioxidants will retard the oxygen-induced aging of the vulcanizate, but will not affect the increase in hardness due to cross-linking.

According to the present invention, it has been found that by adding certain coagents in addition to sulfur and a vulcanization accelerator during the sulfur vulcanization of rubber compounds, vulcanizates, from which e.g. pneumatic tyres can be made, having improved properties can be obtained. These coagents have the effect of stabilizing the hardness properties of the rubber, e.g. during the service life of the rubber vulcanizate, and are hereinafter also referred to as hardness stabilizers.

The present invention provides a sulfur vulcanization process comprising heating a sulfur-vulcanizable rubber composition comprising a rubber, sulfur, and a vulcanization accelerator, characterized in that the process is carried out in the presence of 0.1 to 5.0 parts by weight per 100 parts by weight of rubber of a coagent of formula I: 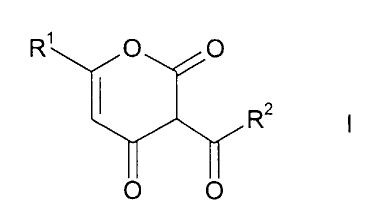 wherein R¹ and R² independently represent H or a C₁-C₅ hydrocarbon group optionally containing one or more oxygen, nitrogen, sulfur, silicon and/or phosphorus atoms.

Preferably, R¹ and R² independently represent a C₁-C₅ hydrocarbon group. A typical example of a coagent in accordance with the present invention which is commercially available is dehydroacetic acid, wherein R¹ and R² both are methyl groups.

Either a single coagent of formula I or a mixture of coagents of formula I may be used in the invention process.

Rubbers that harden upon aging include styrene butadiene rubber (SBR), chloroprene rubber (CR), nitrile rubber (NBR), chlorobutyl rubber (CIIR), butadiene rubber (BR), polysulfide rubbers, ethylene propylene diene terpolymer (EPDM), chlorosulfonated polyethylene (CSM), silicone rubber with vinyl groups (VMQ), and mixtures thereof, as well as mixtures of any one of these rubbers with polyisoprene rubbers, such as natural rubber (NR). The reader is referred to Hofmann, Rubber Technology Handbook, Hanser Publishers, Munich 1989, in particular pages 265-266.
Rubbers comprising styrene butadiene rubber are of particular relevance in the art.

In the case of a mixture of a hardening-sensitive rubber with a polyisoprene rubber, hardening is significant when the rubber mixture comprises 20 parts by weight or more of the hardening-sensitive rubber per 100 parts by weight of the total rubber blend.

Preferably, the amount of coagent employed in the process of the present invention is from 0.5 to 5.0, more preferably from 1.0 to 3.0 parts by weight, per 100 parts by weight of total rubber. The number of parts by weight per 100 parts by weight of rubber is expressed as phr.

In the process of the invention either sulfur or a sulfur donor is employed. The amount of sulfur to be compounded with the rubber is usually from 0.1 to 10, preferably from 0.1 to 5, more preferably from 0.5 to 3 parts by weight, based on 100 parts by weight of the rubber component. Enough of the sulfur donor to be compounded with the rubber is used to give an amount of sulfur equivalent to when sulfur itself is used. The reader is referred to Hofmann, Rubber Technology Handbook, Hanser Publishers, Munich 1989, in particular pages 231-233.

Typical examples of sulfur donors than can be used in accordance with the present invention include dithiodimorpholine, caprolactam disulfide, tetramethylthiuram disulfide, and dipentamethylenethiuram tetrasulfide.

In the process of the invention, a single vulcanization accelerator or a mixture of accelerators can be employed. For vulcanization accelerators that can be used in accordance with the present invention the reader is referred to Hofmann, Rubber Technology Handbook, Hanser Publishers, Munich 1989, in particular pages 233-255.
Typical vulcanization accelerators include thiazole- and benzothiazole-based accelerators, for example 2-mercaptobenzothiazole and bis(2-benzothiazolyl) disulfide (MBTS), benzothiazole-2-sulfenamide-based accelerators, such as N-cyclohexyl-benzothiazole-2-sulfenamide, N-tert-butyl-benzothiazole-2-sulfenamide, and N,N-dicyclohexyl-benzothiazole-2-sulfenamide, 2-(morpholinothio)benzothiazole, thiophosphoric acid derivatives, thiurams, dithiocarbamates, diphenylguanidine (DPG), diorthotolyl guanidine, dithiocarbamylsulfenamides, and xanthates.
Mixtures of benzothiazole-based vulcanization accelerators with diphenylguanidine can also be used, for example a combination of MBTS with DPG. In the process of the present invention the vulcanization accelerator is usually employed in amounts from 0.1 to 8, preferably from 0.3 to 4.0 parts by weight, per 100 parts by weight of rubber.

Conventional rubber additives may also be included in the vulcanizable rubber composition. For example, reinforcing agents such as carbon black, silica, clay, whiting and other mineral fillers, as well as mixtures of fillers, may be included. Other additives include processing oils, tackifiers, waxes, (phenolic) antioxidants, (phenylenediamine) antidegradants, antiozonants, pigments, e.g. titanium dioxide, resins, plasticizers, factices, and activators, such as stearic acid and zinc oxide. These conventional rubber additives may be added in amounts known to the person skilled in the art of rubber compounding. The reader is also referred to the examples that are described below.
Further, vulcanization inhibitors, i.e. scorch retarders, such as cyclohexylthiophthalimide, phthalic anhydride, pyromellitic anhydride, benzene hexacarboxylic trianhydride, 4-methylphthalic anhydride, trimellitic anhydride, 4-chlorophthalic anhydride, salicylic acid, benzoic acid, maleic anhydride, citraconic anhydride, itaconic anhydride, and N-nitrosodiphenylamine may be included in conventional, known amounts.
For further details on these typical rubber additives and vulcanization inhibitors, see Hofmann, Rubber Technology Handbook, Hanser Publishers, Munich 1989.
Finally, in specific applications it may also be desirable to include steel cord adhesion promoters such as cobalt salts and dithiosulfates in conventional, known quantities.

The vulcanization process can be carried out using means and equipment well-known to a person skilled in the art. Suitable vulcanization procedures are described in Hofmann, Rubber Technology Handbook, Hanser Publishers, Munich 1989.

The hardness stabilizing coagents used in accordance with this invention can be incorporated into rubber by conventional mixing procedures using conventional mixing machines. A typical method comprises preparing a masterbach in an internal mixer such as a Banbury mixer or a Werner & Pfleiderer mixer, and subsequently adding the vulcanization system and the hardness stabilizing coagent in accordance with the present invention to the masterbatch on a two-roll mill.

The invention vulcanization process is typically carried out at a temperature of 120-220°C for a period of up to 12 hours, more preferably at a temperature of 150-200°C for a period of up to 4 hours, in the presence of 0.1-5.0 phr of a hardness stabilizing coagent according to formula I.

The present invention also pertains to articles of manufacture, such as pneumatic tyres and industrial rubber goods, which comprise the rubber vulcanizate obtained by the invention process.

The invention is illustrated by the following examples.

### EXAMPLE 1 AND COMPARATIVE EXAMPLE A

A masterbatch of rubber, carbon black, lubricant/softener (mineral oil), and antidegradant was made in a W&P 5.0 liter internal mixer. The sulfur, accelerator, and hardness stabilizer were mixed on an Agila two-roll mill at approx. 50-70°C. Rubber compounds were vulcanized by compression moulding at 145°C/45min. After cooling the vulcanized rubber sheets for 24 h, test pieces were cut and analyzed.
The rheological properties were determined on a Monsanto Rheometer MDR2000E, arc 0.5°, 145°C/60min. Scorch time (tₛ2) is the time at 2% increase of the minimum torque (M_{L}). Optimum vulcanization time (t₉₀) is the time at 90% of the maximum torque (M_{H}). T_{end} is the time at the rheometer and is set at 1 h. Delta torque (Delta S) is the difference between the minimum and the maximum torque. The slope of a rheogram between M_{L} and M_{H} is a measure of the cure rate (RH). Hysteresis is the percentage of energy lost per cycle of deformation. The ratio of loss modulus to storage modulus is defined as mechanical loss and this corresponds to tangent delta (tan d).

The rubber test pieces were aged in a hot air circulation oven for 3 days (72 h) at 100°C to simulate hardening during use, for example, as a tyre.
The stabilization against hardening was determined by International Rubber Hardness Degree (IRHD) measurements and by calculating the so-called modulus stabilization (MS).
IRHD measurements were determined before and after aging. The lower the increase in hardness, the better the stabilization. The IRHD measurements were determined according to ISO 48-1994.
The modulus stabilization is the ratio of the modulus at elongation 200% (Mod200) of the aged and the unaged rubber test pieces and is expressed as a percentage by multiplying this ratio by 100%. The lower the ratio Mod200aged/Mod200unaged, the better the hardness stabilization. The Mod200 was obtained from tensile stress-strain tests which were performed according to ISO 37-1994 (dumb-bell type 2).
- Comparative Example A :: control without hardness stabilizing coagent
- Example 1 :: dehydroacetic acid (DHA)

The coagent was compounded into a rubber composition as shown in Table 1, and the rheological properties of the vulcanization process are shown in Table 2.

**Table 1:**

| Rubber compound compositions | | |
|---|---|---|
| Ingredients | A | 1 |
| SBR Cariflex 1502 | 100.0 | 100.0 |
| Carbon black N-220 | 50.0 | 50.0 |
| Stearic acid | 1.0 | 1.0 |
| ZnO Harzsiegel | 3.0 | 3.0 |
| Ar. oil Enerflex 72 | 10.0 | 10.0 |
| Santoflex 6PPD | 2.0 | 2.0 |
| Perkacit MBTS (A) | 1.0 | 1.0 |
| Perkacit DPG | 0.5 | 0.5 |
| Sulfur | 1.5 | 1.5 |
| Coagent DHA | - | 1.0 |

**Table 2:**

| Rheological properties at 145°C/60min | | |
|---|---|---|
| | A | 1 |
| tₛ2 [min] | 5.29 | 5.38 |
| t₉₀ [min] | 16.12 | 16.48 |
| M_{L} [Nm] | 0.22 | 0.23 |
| Delta S [Nm] | 1.43 | 1.41 |
| RH [Nm/min] | 0.192 | 0.205 |
| tan d(t₉₀) | 0.076 | 0.070 |
| tan d(t_{end}) | 0.070 | 0.065 |
| S"(t₉₀) [Nm] | 0.113 | 0.106 |
| S"(t_{end}) [Nm] | 0.115 | 0.106 |
| S'(t₉₀) [Nm] | 1.50 | 1.50 |

The vulcanizates were analyzed as described above. The results of the IRHD measurements are tabulated in Table 3. The results show that a coagent in accordance with the present invention, i.e. DHA, has a stabilizing effect on the hardening of styrene butadiene rubber.

**Table 3:**

| IRHD measurements | | |
|---|---|---|
| Coagent (Ex.) | unaged | 72h/100°C (increase) |
| None (A) | 67.0 | 73.9 (+6.9) |
| DHA (1) | 69.3 | 73.5 (+4.2) |

The tensile stress-strain data is shown in Table 4, the tensile measurements of aged rubber vulcanizates are tabulated in Table 5, and the modulus stabilization data is compiled in Table 6.

**Table 4:**

| Stress-strain data (cure 145°C/45min) | | |
|---|---|---|
| | A | 1 |
| Tensile [MPa] | 28.06 | 26.88 |
| Elong. [%] | 604 | 552 |
| Mod50 [MPa] | 1.31 | 1.41 |
| Mod100 [MPa] | 1.96 | 2.17 |
| Mod200 [MPa] | 4.92 | 5.52 |
| Mod300 [MPa] | 10.02 | 10.78 |

**Table 5:**

| Tensile measurements of compounds aged at 72h/100°C | | |
|---|---|---|
| | A | 1 |
| Tensile [MPa] | 25.93 | 23.00 |
| Elong. [%] | 453 | 389 |
| Mod50 [MPa] | 1.98 | 2.10 |
| Mod100 [MPa] | 3.40 | 3.58 |
| Mod200 [MPa] | 9.02 | 9.25 |
| Mod300 [MPa] | 15.92 | 16.16 |

**Table 6:**

| Modulus stabilization | |
|---|---|
| Coagent (Ex.) | MS (72h/100°C) |
| None (A) | 183 |
| DHA(1) | 168 |
| MS = Mod200_{aged}/Mod200_{unaged} x 100% | |

The above data shows that the rubber vulcanizate prepared according to the invention process in the presence of a coagent of formula I displayed improved hardness stabilization properties over the control.

## Claims

1. A sulfur vulcanization process which comprises heating a sulfur-vulcanizable rubber composition comprising a rubber, sulfur, and a vulcanization accelerator, characterized in that the process is carried out in the presence of 0.1 to 5.0 parts by weight per 100 parts by weight of rubber of a coagent of formula I: 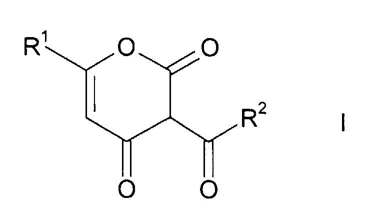 wherein R¹ and R² independently represent H or a C₁-C₅ hydrocarbon group optionally containing one or more oxygen, nitrogen, sulfur, silicon and/or phosphorus atoms.

2. A process according to claim 1, characterized in that R¹ and R² independently represent a C₁-C₅ hydrocarbon group.

3. A process according to claim 1 or 2, characterized in that the coagent is dehydroacetic acid.

4. A process according to any one of the preceding claims, characterized in that the coagent is present in an amount of 1.0 to 3.0 parts by weight per 100 parts by weight of rubber.

5. A process according to any one of the preceding claims, characterized in that the process is carried out at a temperature of 150-200°C for a period of up to 4 h.

6. A process according to any one of the preceding claims, characterized in that the rubber comprises styrene-butadiene rubber.

7. An article of manufacture, such as a pneumatic tyre, comprising the rubber vulcanizate obtained by the process according to any one of the preceding claims.
